# EUROPEAN PATENT SPECIFICATION

(11) **EP 2 874 090 B1**
(45) Date of publication and mention of the grant of the patent: **17.01.2018**
(21) Application number: 14189276.0
(22) Date of filing: 16.10.2014
(51) Int. Cl.: G06F 21/56, H04L 29/06

(54) **Virus processing method and apparatus**
Virenverarbeitungsverfahren und Vorrichtung
Procédé et appareil de traitement de virus

(30) Priority: 19.11.2013 CN 201310583369
(43) Date of publication of application: 20.05.2015
(73) Proprietor: Baidu Online Network Technology Beijing Co., Ltd., Beijing 100085 (CN)
(72) Inventor: Guo, Mingqiang, 100085 Beijing (CN); Qian, Keming, 100085 Beijing (CN); Cao, Liang, 100085 Beijing (CN); Pan, Jinfeng, 100085 Beijing (CN); Dong, Zhiqiang, 100085 Beijing (CN)
(74) Representative: dompatent von Kreisler Selting Werner - Partnerschaft von Patent- und Rechtsanwälten mbB

(56) References cited:
- US-A1- 2009 049 550
- US-B1- 8 370 941

## Description

### Related Applications

The present application claims the priority of the Chinese patent application having Serial No. 2013105833695, entitled "Virus processing method and apparatus", filed on November 19, 2013.

### Field

The present disclosure relates to computer technologies, and particularly to a virus processing method and apparatus.

### Background

Virus is data programmed or inserted in an application to destroy computer functions. It can affect normal use of the application and replicate itself, and usually appears in the form of a group of instructions or program codes. Virus is characterized by destructiveness, complexity, and infectivity. When a file in a system is infected with virus, an anti-virus engine is necessary to scan the system and remove the virus. Since the virus is highly replicable, activated virus may attempt to infect other files in the system so that it is difficult for anti-virus software to thoroughly eradicate the virus out of the system. US 8,370,941 B1 describes a virus processing method in which at least one hook is traversed. Further, code is identified based on the traversal of the at least one nook. In addition, the code is scanned for at least one rootkit.

US 2009/0049550 describes a similar virus processing method for blocking malicious activities.

### Summary

Several aspects of the present disclosure provide a virus processing method and apparatus to improve the security performance of the system.

According to an aspect of the present disclosure, there is provided a virus processing method, comprising steps of:
performing attribute analysis on at least one of threads contained in a target process to determine whether at least one of the threads contained in the target process matches virus attribute information;
if at least one of the threads contained in the target process matches virus attribute information, determining virus type information based on the matched virus attribute information;
prohibiting execution of process creation operation based on the virus type information.

According to the above aspect and any possible implementation, there is further provided an implementation, wherein the step of performing attribute analysis on at least one of threads contained in a target process to determine whether at least one of the threads contained in the target process matches virus attribute information comprises:
obtaining a name of the target process and/or a Hash value of the name;
obtaining attribute information of the threads contained in the target process;
performing a matching operation over a virus attribute library based on the name of the target process and/or the Hash value of the name and the attribute information of the threads contained in the target process, so as to determine whether at least one of threads contained in the target process matches virus attribute information contained in the virus attribute library.

According to the above aspect and any possible implementation, there is further provided an implementation, wherein after the step of prohibiting execution of process creation operation based on the virus type information, the method further comprises:
determining a first file run by the target process corresponding to said at least one thread;
performing a repair operation on the first file based on the virus type information to generate a second file, whose file name comprises a preset or randomly-generated repair identifier; and
performing a replicate operation on the second file to generate a third file, whose file name is identical to that of the first file.

According to the above aspect and any possible implementation, there is further provided an implementation, wherein after performing a replicate operation on the second file to generate a third file, the method further comprises:
instructing system to execute a restart operation; and
deleting the second file.

According to the above aspect and any possible implementation, there is further provided an implementation, wherein the step of prohibiting execution of process creation operation based on the virus type information comprises:
determining whether or not to enter into a safe repair mode based on the virus type information;
generating a notification event upon determining to enter into the safe repair mode;
prohibiting execution of the process creation operation based on the notification event.

According to another aspect of the present disclosure, there is provided a virus processing apparatus, comprising:
an analyzing unit configured to perform attribute analysis on at least one of threads contained in a target process to determine whether at least one of the threads contained in the target process matches virus attribute information;
a determining unit configured to determine virus type information based on the matched virus attribute information if at least one of the threads contained in the target process matches virus attribute information;
an operating unit configured to prohibit execution of process creation operation based on the virus type information.

According to the above aspect and any possible implementation, there is further provided an implementation, wherein the determining unit is specifically configured to
obtain a name of the target process and/or a Hash value of the name;
obtain attribute information of the threads contained in the target process; and
perform a matching operation over a virus attribute library based on the name of the target process and/or the Hash value of the name and the attribute information of the threads contained in the target process, so as to determine whether at least one of threads contained in the target process matches virus attribute information contained in the virus attribute library.

According to the above aspect and any possible implementation, there is further provided an implementation, wherein the apparatus further comprises a repair unit configured to
determine a first file run by the target process corresponding to said at least one thread;
perform a repair operation on the first file based on the virus type information to generate a second file, whose file name comprises a preset or randomly-generated repair identifier; and
perform a replicate operation on the second file to generate a third file, whose file name is identical to that of the first file.

According to the above aspect and any possible implementation, there is further provided an implementation, wherein the repair unit is further configured to
instruct system to execute a restart operation; and
delete the second file.

According to the above aspect and any possible implementation, there is further provided an implementation, wherein the operating unit is specifically configured to
determine whether or not to enter into a safe repair mode based on the virus type information;
generate a notification event upon determining to enter into the safe repair mode; and
prohibiting execution of the process creation operation based on the notification event.

According to another aspect of the present disclosure, there is provided a computer readable storage medium comprising a computer readable program, wherein the computer readable program when executed on a computer causes the computer to perform the steps of:
performing attribute analysis on at least one of threads contained in a target process to determine whether at least one of the threads contained in the target process matches virus attribute information;
if at least one of the threads contained in the target process matches with virus attribute information, determining virus type information based on the matched virus attribute information;
prohibiting execution of process creation operation based on the virus type information.

According to another aspect of the present disclosure, there is provided a computer program product, wherein the computer program product comprising:
a first program product portion configured to perform attribute analysis on at least one of threads contained in a target process to determine whether at least one of the threads contained in the target process matches virus attribute information;
a second program product portion configured to if at least one of the threads contained in the target process matches virus attribute information, determine virus type information based on the matched virus attribute information;and
a third program product portion configured to prohibit execution of process creation operation based on the virus type information.

As can be seen from the above technical solutions, in embodiments of the present disclosure, attribute analysis on the threads contained in the target process is performed to determine whether at least one of the threads contained in the target process matches virus attribute information. If at least one of the threads contained in the target process matches virus attribute information, virus type information is determined based on the matched virus attribute information, so that execution of process creation operation is prohibited based on the virus type information. Due to the measures for prohibiting execution of process creation operation, replication of virus in the system can be effectively prevented so as to improve security performance of the system.

Besides, with the technical solution provided by the present disclosure, the attribute analysis is no longer performed with the file as a whole unit, but performed with each thread contained in the target process as a unit. Since granularity of the attribute analysis is reduced, the security performance of the system can be further improved.

### Brief Description of the Drawings

To illustrate the technical solutions in the embodiments of the present disclosure or the prior art more clearly, accompanying drawings for description of the embodiments or the prior art are briefly introduced hereinafter. Obviously, the accompanying drawings in the following description are merely some embodiments of the present disclosure. One of ordinary skill in the art may further obtain other drawings based on these drawings without creative efforts.
Fig.1 illustrates a flowchart of a virus processing method according to an embodiment of the present disclosure;
Fig.2 illustrates a schematic structure view of a virus processing apparatus according to another embodiment of the present disclosure;
Fig.3 illustrates a schematic structure view of a virus processing apparatus according to a further embodiment of the present disclosure.

### Detailed Description of Embodiments

To give a clearer picture of the purposes, technical solutions, and advantages of the embodiments of the present disclosure, the technical solutions of the embodiments of the present disclosure are clearly and completely described with accompanying drawings for the embodiments of the present disclosure. Evidently, the embodiments to be described are some, rather than all, of the embodiments of the present disclosure. All other embodiments obtained by one of ordinary skill in the art based on the embodiments of the present disclosure without creative efforts fall within the protection scope of the present disclosure.

Moreover, the term "and/or" herein merely describes associated relationship between related objects. It indicates that three types of relationship may exist, for example, A AND/OR B may represent three cases: only A exists, both A AND B exist, and only B exists. In addition, the symbol "/" herein generally represents an "or" relationship between related objects juxtaposed by the symbol "/".

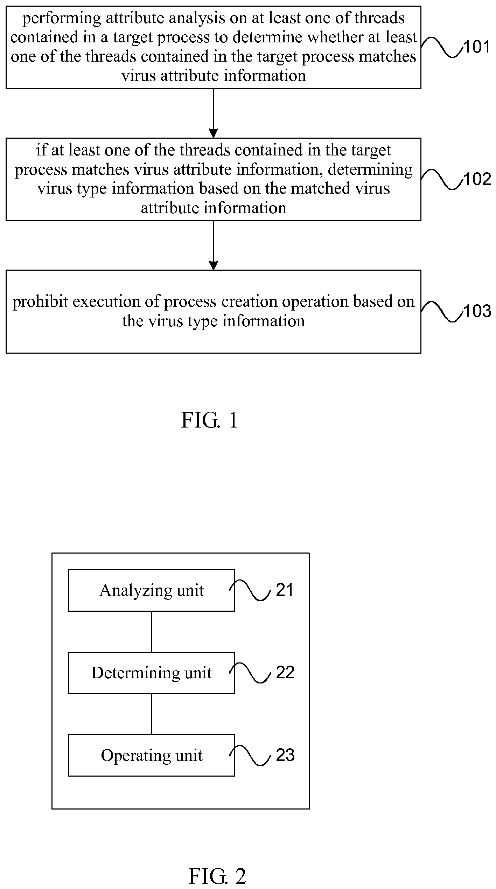

Fig.1 illustrates a flowchart of a virus processing method according to an embodiment of the present disclosure. Fig.1 shows:
Step 101: performing attribute analysis on at least one of threads contained in a target process, so as to determine whether at least one of the threads contained in the target process matches virus attribute information.

In the above step, the target process may be understood as all processes in a system.

Step 102: if at least one of the threads contained in the target process matches virus attribute information, determining virus type information based on the matched virus attribute information.

Specifically, process information such as the process name, thread name, thread state, and thread behavior of each process may be obtained by traversing the processes in the system by using a snapshot method.

Step 103: prohibiting execution of process creation operation based on the virus type information.

In the above step, virus, also called computer virus, may include, but not limited to, Trojan, backdoor, local area network worm, mail worm, spyware, infectious virus, or Rootkits/Bootkits.

Noticeably, the subject for executing step 101-step 103 may be an anti-virus engine, which may be located in a local client to perform offline operation for virus removal, or located in a network-side server to perform online operation for virus removal. The present embodiment is not limited to this.

It may be appreciated that the client may be an application installed on a terminal or a web page of a browser or any objective existing form, so long as it can remove the virus to provide a safe system environment. The present embodiment is not limited to this.

In this way, attribute analysis on the threads contained in the target process is performed to determine whether at least one of the threads contained in the target process matches virus attribute information. If at least one of the threads contained in the target process matches virus attribute information, virus type information is determined based on the matched virus attribute information, and execution of process creation operation is prohibited based on the virus type information. Due to the measures of prohibiting execution of process creation operation, replication of virus in the system can be effectively prevented so as to improve security performance of the system.

Optically, in a possible implementation of the present embodiment, in step 101, an anti-virus engine may specifically obtain the name of the target process and/or a Hash value of the name. The anti-virus engine then obtains attribute information of the threads contained in the target process. The anti-virus engine may then perform a matching operation over a virus attribute library based on the name of the target process and/or a Hash value of the name and the attribute information of the threads contained in the target process, so as to determine whether at least one of threads contained in the target process matches virus attribute information contained in the virus attribute library.

The attribute information may include dynamic attributes and/or static attributes. The dynamic attributes may be understood as virus identifying criterion based on virus behavior, and the static attributes may be understood as virus identifying criterion based on attribute codes of virus.

Specifically, the virus attribute library stores information related to virus attribute information, including, but not limited to, process identifiers (e.g., the name of the target process and/or the Hash value of the name), thread attribute information and identifiers (ID) of the virus attribute information. This is particularly defined in the present disclosure.

For example,
Specifically, the virus engine may perform a first matching operation over the virus attribute library based on the name of the target process and/or the Hash value of the name to determine whether at least one of the target processes matches with the name of one of the processes contained in the virus attribute library.

In the event of successful matching in the first matching operation, the anti-virus engine may further perform a second matching operation over the virus attribute library based on the attribute information of the threads contained in the matched target process to determine whether at least one of the threads contained in the matched target process matches with the virus attribute information corresponding to the target process contained in the virus attribute library. In the case no match is found, the anti-virus engine may further perform a third matching operation over the virus attribute library based on the attribute information of the threads contained in the matched target process to determine whether at least one of the threads contained in matched target process matches virus attribute information contained in the virus attribute library other than the virus attribute information corresponding to the target process.

In the event of unsuccessful matching in the first matching operation, the anti-virus engine may further perform a second matching operation over the virus attribute library based on the attribute information of the threads contained in the target process, so as to determine whether at least one of threads contained in the target processes matches virus attribute information contained in the virus attribute library.

Furthermore, after step 102, the anti-virus engine may further determine to perform operation on said at least one thread and instruct a process management unit to, for example, suspend the thread or stop the thread.

Optionally, the anti-virus engine in the present embodiment may further perform initialization processing for the virus attribute library in advance. Specifically, the anti-virus engine may perform initialization processing for the virus attribute library according to a startup order of the processes.

Optionally, in a possible implementation of the present embodiment, the anti-virus engine may specifically deliver the matched virus attribute information with mask codes. Below are some examples.

In step 101, when each thread is matched with corresponding virus attribute information contained over the virus attribute library, the anti-virus engine records a virus attribute code, and then the anti-virus engine performs an OR operation on the recorded virus attribute codes sequentially to obtain a return value. Specifically, the anti-virus engine may specifically store the return value into a global variable.

Specifically, the virus attribute code may be 4 bytes in a virus code and might contain two or three instructions, or may be bytes of other number in the virus code. The present embodiment is not particularly limited to this.

In step 102, the anti-virus engine performs an AND operation according to the return value obtained in step 101 to obtain the virus attribute code.

Optionally, in a possible implementation of the present embodiment, after step 103, the anti-virus engine may specifically determine a first file run by the target process corresponding to said at least one thread. Then, the anti-virus engine may perform a repair operation on the first file based on the virus type information to generate a second file, and a file name of the second file includes a preset or randomly-generated repair identifier. The anti-virus engine may then perform a repair operation on the second file to generate a third file, and a file name of the third file is identical to that of the first file.

Specifically, the anti-virus engine may load a dedicated anti-virus engine based on the determined virus type information, and perform a repair operation on the first file based on the virus type information. The second file is a file generated after the repair of the first file and is already a file not infected with the virus, if the second file is still given a file name identical to that of the first file, the dedicated anti-virus engine will perform scanning and virus-killing on it again and again, entering into an endless loop. With the technical solution of the present disclosure, the endless loop of the dedicated anti-virus loop can be effectively prevented.

Correspondingly, the anti-virus engine may subsequently instruct system to execute a restart operation. And during the restart of the system or after the system restarts, the anti-virus engine may delete the second file. For example, the anti-virus engine may set a deletion-delay mark bit. When the deletion-delay mark bit is true, the anti-virus engine may instruct the system to perform the restart operation, and then determine the second file according to the repair identifier and delete it. When the deletion-delay mark bit is not true, the anti-virus engine may generate a notification event and send the notification event to the drive to notify the drive to get into a normal state where it no longer prohibits execution of process creation operation.

Optionally, in a possible implementation of the present embodiment, in step 103, the anti-virus engine may specifically determine whether or not to enter into a safe repair mode based on the virus type information. Upon determining to enter into the safe repair mode, the anti-virus engine may generate a notification event and send the notification event to notify prohibition of the execution of the process creation operation.

Specifically, if the virus indicated by the virus type information has a single-process resident property, the anti-virus engine may employ a method in prior art and directly suspend or stop the relevant thread; if the virus indicated by the virus type information has a multi-process resident property, the anti-virus engine may pop up a dialog box to query the user whether or not to enter into the safe repair mode. For example, the content in the pop-up dialog box reads "anti-virus tip: a tough xxx virus being found, please switch to the safe repair mode for thorough virus checking and killing, and you cannot operate other applications during the repair".

If the user clicks a "confirm" button, the anti-virus engine generates a notification event and sends the notification event to the drive to notify the drive to prohibit the execution of process creation operation; if the user clicks a "cancel" button, the anti-virus engine may employ a method in prior art and directly suspend or stop the relevant thread.

In the present embodiment, attribute analysis is performed for threads contained in the target process, so as to determine whether at least one of the threads contained in the target process matches virus attribute information. If at least one of the threads contained in the target process matches virus attribute information, the virus type information is determined based on the matched virus attribute information, and execution of process creation operation is prohibited based on the virus type information. Due to the measures for prohibiting execution of process creation operation, replication of the virus in the system can be effectively prevented so as to improve security performance of the system.

Besides, with the technical solution provided by the present disclosure, the attribute analysis is no longer performed with the file as a whole unit, but performed with each thread contained in the target process as a unit. Since granularity of the attribute analysis is reduced, the security performance of the system can be further improved.

Noticeably, the above-mentioned embodiments all are described as a combination of a series of actions for the sake of simple description, but those skilled in the art know that the present disclosure is not limited to the described order of actions, because some steps may be performed in any other order or simultaneously according to the present disclosure. Moreover, those skilled in the art appreciate that embodiments described in the description all belong to preferred embodiments, and none of the involved actions or modules is a must for the present disclosure.

The above embodiments are each described from different viewpoints, and a portion not detailed in a certain embodiment may find relevant depictions in other embodiments.

Fig.2 illustrates a schematic structure view of a virus processing apparatus according to another embodiment of the present disclosure. As shown in Fig.2, the virus processing apparatus according to the present embodiment may include an analyzing unit 21, a determining unit 22, and an operating unit 23.

In the aforementioned apparatus, the analyzing unit 21 is configured to perform attribute analysis on at least one of threads contained in a target process to determine whether at least one of the threads contained in the target process matches virus attribute information, wherein the target process may be understood as all processes in the system.

The determining unit 22 is configured to determine virus type information based on the matched virus attribute information in the case that at least one of the threads contained in the target process matches virus attribute information. Specifically, the determining unit 22 may specifically obtain process information such as the process name, thread name, thread state, and thread behavior of each process by traversing the processes in the system using a snapshot method.

The operating unit 23 is configured to prohibit execution of process creation operation based on the virus type information, wherein virus, also called computer virus, may include, but not limited to, Trojan, backdoor, local area network worm, mail worm, spyware, infectious virus or Rootkits/Bootkits.

Noticeably, the virus processing apparatus according to the present embodiment may be an anti-virus engine which may be located in a local client to perform offline operation for virus removal, or located in a network-side server to perform online operation for virus removal. The present embodiment is not limited to this.

It may be appreciated that the client may be an application installed on a terminal or a web page of a browser or any objective existing form, so long as it can remove the virus to provide a safe system environment. The present embodiment is not limited to this.

In this way, the analyzing unit performs attribute analysis on the threads contained in the target process, so as to determine whether at least one of the threads contained in the target process matches virus attribute information, then if at least one of the threads contained in the target process matches virus attribute information, the determining unit determines the virus type information based on the matched virus attribute information so that the operating unit can prohibit execution of process creation operation based on the virus type information. Due to the measures of prohibiting execution of process creation operation, replication of virus in the system can be effectively prevented so as to improve security performance of the system.

Optically, in a possible implementation of the present embodiment, the determining unit 22 may specifically be used to obtain the name of the target process and/or a Hash value of the name; obtain attribute information of the threads contained in the target process; and perform a matching operation over a virus attribute library based on the attribute information of the threads contained in the target process, so as to determine whether at least one of threads contained in the target process matches virus attribute information contained in the virus attribute library.

The attribute information may include dynamic attributes and/or static attributes. The dynamic attributes may be understood as virus identifying criterion based on virus behavior, and the static attributes may be understood as virus identifying criterion based on virus attribute codes.

Specifically, the virus attribute library stores information related to virus attribute information, including, but not limited to, process identifiers (e.g., the name of the target process and/or the Hash value of the name), thread attribute information and identifiers (ID) of virus attribute information. This is particularly defined in the present disclosure.

For example,
Specifically, the determining unit 22 may specifically perform a first matching operation over the virus attribute library based on the name of the target process and/or the Hash value of the name to determine whether at least one of the target processes matches with the name of one of the processes contained in the virus attribute library.

In the event of successful matching, the determining unit 22 may further perform a second matching operation over the virus attribute library based on the attribute information of the threads contained in the matched target process to determine whether at least one of the threads contained in the matched target process matches with the virus attribute information corresponding to the target process contained in the virus attribute library. In the case of no matching, the determining unit 22 may further perform a third matching operation over the virus attribute library based on the attribute information of the thread contained in the matched target process to determine whether at least one of the threads contained in the matched target process matches with virus attribute information contained in the virus attribute library other than the virus attribute information corresponding to the target process.

In the event of unsuccessful matching, the determining unit 22 may further perform a second matching operation over the virus attribute library based on the attribute information of the threads contained in the target process, so as to determine whether at least one of the threads contained in the target process matches virus attribute information contained in the virus attribute library.

Furthermore, after step 102, the determining unit 22 may further determine to perform operation on said at least one thread and instruct a process management unit to, for example, suspend the thread or stop the thread.

Optionally, in a possible implementation of the present embodiment, the virus processing apparatus may further perform initialization processing for the virus attribute library in advance. Specifically, initialization processing is performed for the virus attribute library according to a startup order of the processes.

Optionally, in a possible implementation of the present embodiment, the virus processing apparatus ( for example, the analyzing unit 21, the determining unit 22, and the operating unit 23) may specifically deliver the matched virus attribute information with mask codes. Below are some examples.

When each thread matches virus attribute information contained in the virus attribute library, the analyzing unit 21 may record a virus attribute code, and then the analyzing unit 21 performs an OR operation on the recorded virus attribute codes sequentially to obtain a return value. Specifically, the analyzing unit 21 may specifically store the return value into a global variable.

Specifically, the virus attribute code may be 4 bytes in a virus code and might contain two or three instructions, or may be bytes of any other number in the virus code. The present embodiment is not limited to this particularly.

The determining unit 22 performs an AND operation according to the return value obtained by the analyzing unit 21 to obtain the virus attribute code.

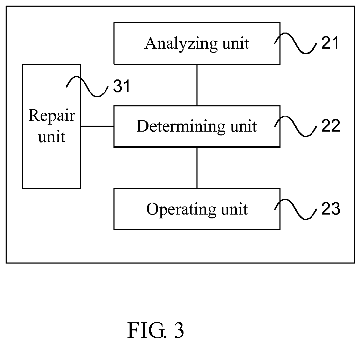

Optionally, in a possible implementation of the present embodiment, the virus processing apparatus according to the present embodiment as shown in Fig.3 may further comprise a repair unit 31 configured to determine a first file run by the target process corresponding to said at least one thread; then perform a repair operation on the first file based on the virus type information to generate a second file, whose file name comprises a preset or randomly-generated repair identifier; and perform a replicate operation on the second file to generate a third file, whose file name is identical to that of the first file.

Specifically, the repair unit 31 may specifically load a dedicated anti-virus engine based on the virus type information determined by the determining unit 22, and perform the repair operation on the first file based on the virus type information. The second file is a file generated after the repair of the first file and is already a file not infected with the virus, if the second file is still given a file name identical to that of the first file, the dedicated anti-virus engine will perform scanning and virus-killing for it again and again, entering into an endless loop. With the technical solution of the present disclosure, the endless loop of the dedicated anti-virus loop can be effectively prevented.

Correspondingly, the repair unit 31 may further instruct system to execute a restart operation; and delete the second file. Specifically, during the system restart or after the system restart, the repair unit 31 may delete the second file. For example, the repair unit 31 may set a deletion-delay mark bit. When the deletion-delay mark bit is true, the repair unit 31 may instruct the system to perform a restart operation, and then determine the second file according to the repair identifier and delete it. When the deletion-delay mark bit is not true, the repair unit 31 may generate a notification event and send the notification event to the drive to notify the drive to enter into a normal state wherein it no longer prohibits execution of process creation operation.

Optionally, in a possible implementation of the present embodiment, the operating unit 23 may specifically determine whether or not to enter into a safe repair mode based on the virus type information; generate the notification event upon determining to enter into the safe repair mode; and send the notification event to notify prohibition of the execution of the process creation operation.

Specifically, if the virus indicated by the virus type information has a single-process resident property, the operating unit 23 may employ a method in prior art and directly suspend or stop the relevant thread; if the virus indicated by the virus type information has a multi-process resident property, the operating unit 23 may pop up a dialog box to query the user whether or not to enter into the safe repair mode. For example, the content in the pop-up dialog box reads "anti-virus tip: a tough xxx virus being found, please switch to the safe repair mode for thorough virus checking and killing, and you cannot operate other applications during the repair".

If the user clicks a "confirm" button, the operating unit 23 generates the notification event and sends the notification event to the drive to notify the drive to prohibit execution of process creation operation; if the user clicks a "cancel" button, the operating unit 23 may employ a method in prior art and directly suspend or stop the relevant thread.

In the present embodiment, the analyzing unit performs attribute analysis on the threads contained in the target process, so as to determine whether at least one of the threads contained in the target process matches virus attribute information, then if at least one of the threads contained in the target process matches virus attribute information, the determining unit determines the virus type information based on the matched virus attribute information so that the operating unit prohibits execution of process creation operation based on the virus type information. Due to the measures for prohibiting execution of process creation operation, replication of virus in the system can be effectively prevented so as to improve security performance of the system.

Besides, with the technical solution provided by the present disclosure, the attribute analysis is no longer performed with the file as a whole unit, but performed with each thread contained in the target process as a unit. Since granularity of the attribute analysis is reduced, the security performance of the system can be further improved.

Those skilled in the art may clearly understand that, for ease and concision of description, for a specific working process of the foregoing described system, apparatus, and unit, reference may be made to a corresponding process in the foregoing method embodiments, and details are not repeatedly described here.

In the several embodiments provided in this application, it should be understood that, the disclosed system, apparatus, and method may be implemented by other manners. For example, the foregoing described apparatus embodiment is only exemplary. For example, dividing of the units is only a type of dividing of logical functions. In actual implementation, there may be other dividing methods. For example, a plurality of units or components may be combined or integrated into another system, or some attributes may be ignored, or may not be executed. In addition, the illustrated or discussed mutual coupling, or direct coupling, or communication connection may be implemented through some interfaces, and indirect coupling or communication connection of apparatuses or units may be electrical, mechanical, or in other forms.

The units that are described as separate components may be or may not be physically separated, and the components shown as units may be or may not be physical units, that is, may be located at one place, or may also be distributed on multiple network units. Part of or all of the units may be selected, according to an actual need, to achieve the purposes of the solutions in the embodiments.

In addition, function units in each embodiment of the present disclosure may be integrated into a processing unit, and each unit may also exist independently and physically, and two or more than two units may also be integrated into one unit. The foregoing integrated unit may be implemented in the form of hardware, and may also be implemented in the form of hardware plus a software function unit.

The foregoing integrated unit implemented in the form of the software function unit may be stored in a computer readable storage medium. The software function unit is stored in a storage medium, including several instructions used for a computer device (which may be a personal computer, a server, or a network device, and so on) and a processor to execute part of the steps of the method in each embodiment of the present disclosure. The foregoing storage medium includes various media that can store procedure codes, such as a USB disk, a portable hard disk, a read only memory (Read-Only Memory, abbreviated as ROM), a random access memory (Random Access Memory, abbreviated as RAM), a magnetic disk, or a compact disk.

## Claims

1. A virus processing method, wherein the method comprises steps of:
obtaining a name of a target process and/or a Hash value of the name, and obtaining attribute information of the threads contained in the target process;
performing a matching operation over a virus attribute library based on the name of the target process and/or the Hash value of the name and the attribute information of the threads contained in the target process, so as to determine whether at least one of threads contained in the target process matches virus attribute information contained in the virus attribute library 101;
if at least one of the threads contained in the target process matches virus attribute information, determining virus type information based on the matched virus attribute information 102; **characterized by**
prohibiting execution of process creation operation based on the virus type information 103.

2. The method according to claim 1, wherein after the step of prohibiting execution of process creation operation based on the virus type information, the method further comprises:
determining a first file run by the target process corresponding to said at least one thread;
performing a repair operation on the first file based on the virus type information to generate a second file, whose file name comprises a preset or randomly-generated repair identifier; and
performing a replicate operation on the second file to generate a third file, whose file name is identical to that of the first file;
wherein the said performing a repair operation on the first file based on the virus type information comprising:loading a dedicated anti-virus engine based on the determined virus type information, and performing a repair operation on the first file.

3. The method according to claim 2, wherein after performing a replicate operation on the second file to generate a third file, the method further comprises:
instructing a system to execute a restart operation; and
deleting the second file.

4. The method according to claim 1, wherein the step of prohibiting execution of process creation operation based on the virus type information comprises:
determining whether or not to enter into a safe repair mode based on the virus type information;
generating a notification event upon determining to enter into the safe repair mode;
prohibiting execution of the process creation operation based on the notification event;
wherein a thorough virus checking and killing is implemented and other process cannot be operated after entering into a safe repair mode.

5. A virus processing apparatus, wherein the apparatus comprises:
an analyzing unit 21 configured to
obtain a name of the target process and/or a Hash value of the name;
obtain attribute information of the threads contained in the target process; and
perform a matching operation over a virus attribute library based on the name of the target process and/or the Hash value of the name and the attribute information of the threads contained in the target process, so as to determine whether at least one of threads contained in the target process matches virus attribute information contained in the virus attribute library 101;
a determining unit 22 configured to determine virus type information based on the matched virus attribute information in the case that at least one of the threads contained in the target process matches virus attribute information 102; **characterized by**
an operating unit 23 configured to prohibit execution of process creation operation based on the virus type information 103.

6. The apparatus according to claim 5, wherein the apparatus further comprises a repair unit configured to
determine a first file run by the target process corresponding to said at least one thread;
perform a repair operation on the first file based on the virus type information to generate a second file, whose file name comprises a preset or randomly-generated repair identifier; and
perform a replicate operation on the second file to generate a third file, whose file name is identical to that of the first file;
wherein the said performing a repair opteration on the first file based on the virus type information comprising:loading a dedicated anti-virus engine based on the determined virus type information, and performing a repair operation on the first file.

7. The apparatus according to claim 6, wherein the repair unit is further configured to
instruct a system to execute a restart operation; and
delete the second file.

8. The apparatus according to claim 5, wherein the operating unit is specifically configured to
determine whether or not to enter into a safe repair mode based on the virus type information;
generate a notification event upon determining to enter into the safe repair mode; and
prohibiting execution of process creation operation based on the notification event;
wherein a thorough virus checking and killing is implemented and other process cannot be operated after entering into a safe repair mode.

9. A computer readable storage medium comprising a computer readable program, wherein the computer readable program when executed on a computer causes the computer to perform the steps of:
obtaining a name of a target process and/or a Hash value of the name, and obtaining attribute information of the threads contained in the target process;
performing a matching operation over a virus attribute library based on the name of the target process and/or the Hash value of the name and the attribute information of the threads contained in the target process, so as to determine whether at least one of threads contained in the target process matches virus attribute information contained in the virus attribute library 101;
if at least one of the threads contained in the target process matches with virus attribute information, determining virus type information based on the matched virus attribute information 102; **characterized by**
prohibiting execution of process creation operation based on the virus type information 103.

10. A computer program product downloadable from a communication network and/or stored on a computer-readable and/or microprocessor-executable medium, comprising: a first program code instruction for
obtaining a name of the target process and/or a Hash value of the name;
obtaining attribute information of the threads contained in the target process; and
performing a matching operation over a virus attribute library based on the name of the target process and/or the Hash value of the name and the attribute information of the threads contained in the target process, so as to determine whether at least one of threads contained in the target process matches virus attribute information contained in the virus attribute library 101;
a second program code instruction for determining virus type information based on the matched virus attribute information, in case at least one of the threads contained in the target process matches virus attribute information 102;and **characterized by**
a third program code instruction for prohibiting execution of process creation operation based on the virus type information 103.

## Patentansprüche

1. Virenverarbeitungsverfahren, bei welchem das Verfahren die folgenden Schritte aufweist:
Erhalten eines Namens eines Ziel prozesses und/oder eines Hash-Werts des Namens, und Erhalten von Attributinformationen der in dem Zielprozess enthaltenen Threads;
Durchführen eines Abgleichprozesses über eine Virusattribute-Bibliothek auf der Basis des Namens des Ziel prozesses und/oder des Hash-Werts des Namens und der Attributinformationen der in dem Zielprozess enthaltenen Threads, um festzustellen, ob mindestens einer der in dem Zielprozess enthaltenen Threads mit in der Virusattribute-Bibliothek enthaltenen Virusattributinformationen übereinstimmt 101;
falls mindestens einer der in dem Zielprozess enthaltenen Threads mit Virusattributinformationen übereinstimmt, Bestimmen der Virusattributinformationen auf der Basis der übereinstimmenden Virusattributinformationen 102; **gekennzeichnet durch**
das Verbieten der Ausführung einer Prozesserzeugungsoperation auf der Basis der Virustypinformationen 103.

2. Verfahren nach Anspruch 1, bei welchem das Verfahren nach dem Schritt des Verbietens einer Prozesserzeugungsoperation auf der Basis der Virustypinformationen ferner die folgenden Schritte aufweist:
Bestimmen einer ersten Datei, welche von dem dem mindestens einen Thread entsprechenden Zielprozess ausgeführt wird;
Durchführen einer Reparaturoperation an der ersten Datei auf der Basis der Virustypinformationen, um eine zweite Datei zu erzeugen, deren Dateiname eine voreingestellte oder zufällig erzeugte Reparaturkennung enthält;
Durchführen einer Replikationsoperation an der zweiten Datei zur Erzeugung einer dritten Datei, deren Dateiname mit demjenigen der ersten Datei identisch ist;
wobei das Durchführen einer Reparaturoperation an der ersten Datei auf der Basis der Virustypinformationen aufweist: das Laden einer dedizierten Antivirus-Engine auf der Basis der bestimmten Virustypinformationen und Durchführen einer Reparaturoperation an der ersten Datei.

3. Verfahren nach Anspruch 2, bei welchem das Verfahren nach dem Durchführen einer Replikationsoperation an der zweiten Datei zur Erzeugung einer dritten Datei ferner die folgenden Schritte aufweist:
Anweisen des Systems, eine Neustartoperation durchzuführen; und
Löschen der zweiten Datei.

4. Verfahren nach Anspruch 1, bei welchem der Schritt des Verbietens der Durchführung einer Prozesserzeugungsoperation auf der Basis der Virustypeninformationen aufweist:
basierend auf den Virustypinformationen, bestimmen, ob in einen sicheren Reparaturmodus übergegangen werden soll oder nicht;
Erzeugen eines Mitteilungsereignisses, wenn der Übergang in den sicheren Reparaturmodus bestimmt wird;
Verbieten der Durchführung der Prozesserzeugungsoperation auf der Basis des Mitteilungsereignisses;
wobei eine eingehende Virenprüfung und -löschung durchgeführt wird und kein anderer Prozess nach dem Übergang in den sicheren Reparaturmodus durchgeführt werden kann.

5. Virenverarbeitungsvorrichtung, bei welcher die Vorrichtung aufweist:
eine Analyseeinheit 21, welche dazu ausgebildet ist,
einen Namen des Ziel prozesses und/oder einen Hash-Werts des Namens zu erhalten;
Attributinformationen der in dem Zielprozess enthaltenen Threads zu erhalten; und
einen Abgleichprozess über eine Virusattribute-Bibliothek auf der Basis des Namens des Ziel prozesses und/oder des Hash-Werts des Namens und der Attributinformationen der in dem Zielprozess enthaltenen Threads durchzuführen, um festzustellen, ob mindestens einer der in dem Zielprozess enthaltenen Threads mit in der Virusattribute-Bibliothek enthaltenen Virusattributinformationen übereinstimmt 101;
eine Bestimmungseinheit 22, die dazu ausgebildet ist, die Virusattributinformationen auf der Basis der übereinstimmenden Virusattributinformationen zu bestimmen, falls mindestens einer der in dem Zielprozess enthaltenen Threads mit Virusattributinformationen übereinstimmt 102, **gekennzeichnet durch**
eine Operationseinheit 23, die dazu ausgebildet ist, das Durchführen von Prozesserzeugungsoperationen auf der Basis der Virustypinformationen zu verbieten.

6. Vorrichtung nach Anspruch 5, bei welcher die Vorrichtung ferner eine Reparatureinheit aufweist, welche dazu ausgebildet ist,
eine erste Datei zu bestimmen, welche von dem dem mindestens einen Thread entsprechenden Zielprozess ausgeführt wird;
eine Reparaturoperation an der ersten Datei auf der Basis der Virustypinformationen durchzuführen, um eine zweite Datei zu erzeugen, deren Dateiname eine voreingestellte oder zufällig erzeugte Reparaturkennung enthält; und
eine Replikationsoperation an der zweiten Datei zur Erzeugung einer dritten Datei durchzuführen, deren Dateiname mit demjenigen der ersten Datei identisch ist;
wobei das Durchführen einer Reparaturoperation an der ersten Datei auf der Basis der Virustypinformationen aufweist: das Laden einer dedizierten Antivirus-Engine auf der Basis der bestimmten Virustypinformationen und Durchführen einer Reparaturoperation an der ersten Datei.

7. Vorrichtung nach Anspruch 6, bei welcher die Reparatureinheit ferner dazu ausgebildet ist,
ein System anzuweisen, eine Neustartoperation durchzuführen; und
die zweite Datei zu löschen.

8. Vorrichtung nach Anspruch 5, bei welcher die Operationseinheit spezifisch dazu ausgebildet ist,
auf der Basis der Virustypeninformationen zu bestimmen, ob ein Übergang in einen sicheren Reparaturmodus erfolgen soll oder nicht;
ein Mitteilungsereignis zu erzeugen, wenn der Übergang in den sicheren Reparaturmodus bestimmt wird; und
die Durchführung der Prozesserzeugungsoperation auf der Basis des Mitteilungsereignisses zu verbieten;
wobei eine eingehende Virenprüfung und -löschung durchgeführt wird und kein anderer Prozess nach dem Übergang in den sicheren Reparaturmodus durchgeführt werden kann.

9. Computerlesbares Speichermedium mit einem computerlesbaren Programm, wobei das computerlesbare Programm bei der Ausführung auf einem Computer den Computer zur Durchführung der folgenden Schritte veranlasst:
Erhalten eines Namens eines Ziel prozesses und/oder eines Hash-Werts des Namens, und Erhalten von Attributinformationen der in dem Zielprozess enthaltenen Threads;
Durchführen eines Abgleichprozesses über eine Virusattribute-Bibliothek auf der Basis des Namens des Ziel prozesses und/oder des Hash-Werts des Namens und der Attributinformationen der in dem Zielprozess enthaltenen Threads, um festzustellen, ob mindestens einer der in dem Zielprozess enthaltenen Threads mit in der Virusattribute-Bibliothek enthaltenen Virusattributinformationen übereinstimmt 101;
falls mindestens einer der in dem Zielprozess enthaltenen Threads mit Virusattributinformationen übereinstimmt, Bestimmen der Virusattributinformationen auf der Basis der übereinstimmenden Virusattributinformationen 102; **gekennzeichnet durch**
das Verbieten der Ausführung einer Prozesserzeugungsoperation auf der Basis der Virustypinformationen 103.

10. Computerprogrammprodukt, das von einem Kommunikationsnetzwerk herunterladbar und/oder auf einem computerlesbaren und/oder von einem Mikroprozessor ausführbaren Medium gespeichert ist, mit:
einem ersten Programmcodebefehl zum
Erhalten eines Namens eines Ziel prozesses und/oder eines Hash-Werts des Namens;
Erhalten von Attributinformationen der in dem Zielprozess enthaltenen Threads; und
Durchführen eines Abgleichprozesses über eine Virusattribute-Bibliothek auf der Basis des Namens des Ziel prozesses und/oder des Hash-Werts des Namens und der Attributinformationen der in dem Zielprozess enthaltenen Threads, um festzustellen, ob mindestens einer der in dem Zielprozess enthaltenen Threads mit in der Virusattribute-Bibliothek enthaltenen Virusattributinformationen übereinstimmt 101;
einem zweiten Programmcodebefehl zum Bestimmen der Virusattributinformationen auf der Basis der übereinstimmenden Virusattributinformationen 102, falls mindestens einer der in dem Zielprozess enthaltenen Threads mit Virusattributinformationen übereinstimmt; **gekennzeichnet durch**
einen dritten Programmcodebefehl zum Verbieten der Ausführung einer Prozesserzeugungsoperation auf der Basis der Virustypinformationen 103.

## Revendications

1. Procédé de traitement de virus, dans lequel le procédé comprend des étapes de :
obtention d'un nom d'un processus cible et/ou d'une valeur de Hachage du nom, et obtention d'informations d'attribut des fils contenus dans le processus cible ;
réalisation d'une opération de concordance sur une banque d'attributs de virus d'après le nom du processus cible et/ou la valeur de Hachage du nom et les informations d'attribut des fils contenus dans le processus cible, de façon à déterminer si au moins l'un des fils contenus dans le processus cible concorde avec des informations d'attribut de virus contenues dans la banque d'attributs de virus 101 ;
si au moins l'un des fils contenus dans le processus cible concorde avec des informations d'attribut de virus, détermination d'informations de type de virus d'après les informations d'attribut de virus concordantes 102 ;
**caractérisé par**
l'interdiction d'exécution d'une opération de création de processus d'après les informations de type de virus 103.

2. Procédé selon la revendication 1, dans lequel après l'étape d'interdiction d'exécution d'une opération de création de processus d'après les informations de type de virus, le procédé comprend en outre :
la détermination d'un premier fichier exécuté par le processus cible correspondant audit au moins un fil ;
la réalisation d'une opération de réparation sur le premier fichier d'après les informations de type de virus pour générer un deuxième fichier, dont le nom de fichier comprend un identifiant de réparation préétabli ou généré aléatoirement ; et
la réalisation d'une opération de reproduction sur le deuxième fichier pour générer un troisième fichier, dont le nom de fichier est identique à celui du premier fichier ;
dans lequel ladite réalisation d'une opération de réparation sur le premier fichier d'après les informations de type de virus comprenant : le chargement d'un moteur antivirus dédié d'après les informations de type de virus déterminées, et la réalisation d'une opération de réparation sur le premier fichier.

3. Procédé selon la revendication 2, dans lequel après réalisation d'une opération de reproduction sur le deuxième fichier pour générer un troisième fichier, le procédé comprend en outre :
l'instruction à un système d'exécuter une opération de redémarrage ; et
la suppression du deuxième fichier.

4. Procédé selon la revendication 1, dans lequel l'étape d'interdiction d'exécution d'une opération de création de processus d'après les informations de type de virus comprend :
le fait de déterminer s'il faut entrer ou non dans un mode de réparation sans échec d'après les informations de type de virus ;
la génération d'un événement de notification lors de la détermination qu'il faut entrer dans le mode de réparation sans échec ;
l'interdiction d'exécution de l'opération de création de processus d'après l'événement de notification ;
dans lequel un contrôle et une élimination approfondie de virus sont implémentés et un autre processus ne peut pas être exploité après entrée dans un mode de réparation sans échec.

5. Appareil de traitement de virus, dans lequel l'appareil comprend :
une unité d'analyse 21 configurée pour
obtenir un nom du processus cible et/ou une valeur de Hachage du nom ;
obtenir des informations d'attribut des fils contenus dans le processus cible ; et
réaliser une opération de concordance sur une banque d'attributs de virus d'après le nom du processus cible et/ou la valeur de Hachage du nom et les informations d'attribut des fils contenus dans le processus cible, de façon à déterminer si au moins l'un des fils contenus dans le processus cible concorde avec des informations d'attribut de virus contenues dans la banque d'attributs de virus 101 ;
une unité de détermination 22 configurée pour déterminer des informations de type de virus d'après les informations d'attribut de virus concordantes dans le cas où au moins l'un des fils contenus dans le processus cible concorde avec des informations d'attribut de virus 102 ; **caractérisé par**
une unité d'exploitation 23 configurée pour interdire l'exécution d'une opération de création de processus d'après les informations de type de virus 103.

6. Appareil selon la revendication 5, dans lequel l'appareil comprend en outre une unité de réparation configurée pour
déterminer un premier fichier exécuté par le processus cible correspondant audit au moins un fil ;
réaliser une opération de réparation sur le premier fichier d'après les informations de type de virus pour générer un deuxième fichier, dont le nom de fichier comprend un identifiant de réparation préétabli ou généré aléatoirement ; et
réaliser une opération de reproduction sur le deuxième fichier pour générer un troisième fichier, dont le nom de fichier est identique à celui du premier fichier ;
dans lequel ladite réalisation d'une opération de réparation sur le premier fichier d'après les informations de type de virus comprend : le chargement d'un moteur antivirus dédié d'après les informations de type de virus déterminées, et la réalisation d'une opération de réparation sur le premier fichier.

7. Appareil selon la revendication 6, dans lequel l'unité de réparation est en outre configurée pour
donner l'instruction à un système d'exécuter une opération de redémarrage ; et
supprimer le deuxième fichier.

8. Appareil selon la revendication 5, dans lequel l'unité d'exploitation est spécifiquement configurée pour
déterminer s'il faut entrer ou non dans un mode de réparation sans échec d'après les informations de type de virus ;
générer un événement de notification lors de la détermination qu'il faut entrer dans le mode de réparation sans échec ; et
interdire l'exécution d'une opération de création de processus d'après l'événement de notification ;
dans lequel un contrôle et une élimination approfondie de virus sont implémentés et un autre processus ne peut pas être exploité après entrée dans un mode de réparation sans échec.

9. Support de stockage lisible par ordinateur comprenant un programme lisible par ordinateur, dans lequel le programme lisible par ordinateur lorsqu'il est exécuté sur un ordinateur amène l'ordinateur à réaliser les étapes de :
obtention d'un nom d'un processus cible et/ou d'une valeur de Hachage du nom, et obtention d'informations d'attribut des fils contenus dans le processus cible ;
réalisation d'une opération de concordance sur une banque d'attributs de virus d'après le nom du processus cible et/ou la valeur de Hachage du nom et les informations d'attribut des fils contenus dans le processus cible, de façon à déterminer si au moins l'un des fils contenus dans le processus cible concorde avec des informations d'attribut de virus contenues dans la banque d'attributs de virus 101 ;
si au moins l'un des fils contenus dans le processus cible concorde avec des informations d'attribut de virus, détermination d'informations de type de virus d'après les informations d'attribut de virus concordantes 102 ; **caractérisé par**
l'interdiction d'exécution d'une opération de création de processus d'après les informations de type de virus 103.

10. Produit de programme d'ordinateur téléchargeable depuis un réseau de communication et/ou stocké sur un support lisible par ordinateur et/ou exécutable par microprocesseur, comprenant : une première instruction de code de programme pour
obtenir un nom du processus cible et/ou une valeur de Hachage du nom ;
obtenir des informations d'attribut des fils contenus dans le processus cible ; et
réaliser une opération de concordance sur une banque d'attributs de virus d'après le nom du processus cible et/ou la valeur de Hachage du nom et les informations d'attribut des fils contenus dans le processus cible, de façon à déterminer si au moins l'un des fils contenus dans le processus cible concorde avec des informations d'attribut de virus contenues dans la banque d'attributs de virus 101 ;
une deuxième instruction de code de programme pour déterminer des informations de type de virus d'après les informations d'attribut de virus concordantes, dans le cas où au moins l'un des fils contenus dans le processus cible concorde avec des informations d'attribut de virus 102 ; et **caractérisé par**
une troisième instruction de code de programme pour interdire l'exécution d'une opération de création de processus d'après les informations de type de virus 103.
